# EUROPÄISCHE PATENTANMELDUNG

(11) **EP 3 187 070 A1**
(43) Veröffentlichungstag der Anmeldung: **05.07.2017**
(21) Anmeldenummer: 15203227.2
(22) Anmeldetag: 31.12.2015
(51) Int. Cl.: A47B 47/00, F16B 12/40, F16B 12/44

(54) **VERBINDUNGSELEMENT, MÖBELGERÜST UND MÖBELELEMENT**

(71) Anmelder: talsee AG, 6281 Hochdorf (CH)
(72) Erfinder: Die Erfindernennung liegt noch nicht vor
(74) Vertreter: TSWpat Luzern AG

(57) **Zusammenfassung**

Die Erfindung betrifft ein Verbindungselement (10) zum Verbinden von Profilen eines Möbelgerüsts. Das Verbindungselement (10) umfasst eine Mehrzahl von Zapfen (12' - 12"'), welche sich voneinander radial in einer vorbestimmten Winkelbeziehung zueinander erstrecken, und wenigstens ein Ausgleichselement (14), welches eine auskragende Sichtkante (16) umfasst, welche wenigstens abschnittsweise über Aussenflächen der Profile (24) übersteht.

## Beschreibung

Die vorliegende Erfindung betrifft ein Verbindungselement, ein Möbelgerüst und ein Möbelelement gemäss den unabhängigen Ansprüchen.

Bekannte Verbindungselemente für ein Möbelgerüst umfassen z.B. Kugelkörper, an denen zylindrische Streben endseitig aufgesetzt sind und hiermit über eine kraftschlüssige Verbindung, beispielsweise eine Schraubverbindung, Klemmverbindung, usw., lösbar verbunden sind. Somit können beispielsweise zwei Streben, welche eine gemeinsame Ebene aufspannen, um 90° zueinander winkelversetzt verbunden werden. Ferner kann wenigstens eine zusätzliche Strebe senkrecht zu dieser Ebene mit dem Kugelkörper verbunden werden. Es können vier Kugelkörper an Eckpunkten von einer Ebene bereitgestellt werden, wobei die Kugelkörper jeweils dazwischen eine Strebe lagern bzw. einspannen und die an jeweils einem Kugelkörper gelagerten Streben zueinander um 90° winkelversetzt sind. Somit wird ein rechteckiges Gestell ausgebildet, welches durch zusätzliche Streben, welche ebenfalls fest mit den jeweiligen Kugelkörpern verbunden sind und senkrecht zu der Gestellebene ausgerichtet sind, gelagert oder erweitert werden kann. Obwohl die Verbindungselemente aus dem Stand der Technik hier als sichtbare Kugelkörper beschrieben sind, können diese auch quaderförmige bzw. würfelförmige Körper umfassen. Die jeweils senkrecht zur Gestellebene verlaufenden Streben dienen als vertikale Stützstreben und können beispielsweise über zwischengesetzte Fussabschnitte direkt auf einer Lagerfläche, beispielsweise ein Fussboden, aufliegen oder eine Verbindung zu einem beispielsweise ähnlich aufgespannten Gestell (eine weitere Ebene) herstellen, so dass die Gestelle übereinander angeordnet werden und somit ein Möbelgerüst ausbilden können. Somit kann ein modulares Möbelgerüst aufgebaut werden. Es besteht ein Nachteil darin, dass die Befestigung der einzelnen Streben an den Kugelkörpern sehr mühsam und zeitaufwendig ist und den Einsatz von Werkzeug, oftmals teures und unhandliches Spezialwerkzeug, nötig macht. Ein weiterer Nachteil besteht darin, dass durch dieses bekannte Verbindungssystem jeweils gerade zugeschnittene Streben verbunden werden können. Zudem sind die Verbindungselemente an den Verbindungsstellen sichtbar und werden als markante, technische Elemente wahrgenommen, welches unerwünscht ist.

Es sind Möbelgerüste bekannt, deren Streben mittels eines Verbindungselements über einen Winkel von z.B. 90° miteinander verbunden werden, wobei die Streben hierzu an der jeweiligen Verbindungsstelle bzw. Stirnfläche jeweils um 45° angewinkelt sind. Bei der Verbindung von z.B. drei Streben werden die Streben in zwei Dimensionen um jeweils 45° abgewinkelt. Unter der Annahme toleranzfrei hergestellter Komponenten schlagen die Stirnflächen bündig aneinander an. In der Praxis sind die Komponenten eines Möbelgerüsts jedoch toleranzbehaftet. Daher stossen die Stirnflächen nicht absolut bündig aneinander an und bilden zwischen sich einen Spalt aus. Die Komponenten können mit höherer Genauigkeit gefertigt werden, wodurch jedoch die Herstellungskosten stark ansteigen.

Es ist Aufgabe der vorliegenden Erfindung ein Verbindungselement, ein Möbelgerüst und ein Möbelelement bereitzustellen, bei welchen die Probleme aus dem Stand der Technik gelöst sind.

Diese Aufgabe wird gelöst durch ein Verbindungselement gemäss dem vorliegenden Anspruch 1. Erfindungsgemäss umfasst das Verbindungselement zum Verbinden von Profilen eines Möbelgerüsts eine Mehrzahl von Zapfen, welche sich voneinander radial in einer vorbestimmten Winkelbeziehung zueinander erstrecken, und wenigstens ein Ausgleichselement, welches eine auskragende Sichtkante umfasst, welche wenigstens abschnittsweise über Aussenflächen der Profile übersteht. Somit ist ein 2-achsiges, 3-achsiges oder mehrachsiges Verbindungselement geschaffen, dessen Zapfen in korrespondierend ausgeformte Aushöhlungen der zu verbindenden Profile eingesteckt werden und wobei die Profile bei einer vorbestimmten Winkelbeziehung zueinander spaltfrei verbunden werden. Bei einem 2-achsigen Verbindungselement können die beiden Zapfen auf einer gemeinsamen Ebene um 90° voneinander winkelversetzt sein. Es können vier dieser Verbindungselemente mittels jeweils einer zwischengesetzten Strebe den Umriss eines Rechtecks ausmachen. Unter der Voraussetzung, dass die Zapfen eines jeden Verbindungselements um 90° voneinander winkelversetzt sind, haben zueinander gegenüberliegende Profile jeweils die gleiche Länge. Die Stirnflächen der einzelnen Profile sind um 45° zueinander angeschrägt bzw. auf Gehrung geschnitten. Im zusammengesteckten Zustand stossen die Stirnflächen der Profile jeweils an das Ausgleichselement an und schliessen die Profile somit einen Winkel von 90° ein. Die Stirnflächen stossen im zusammengesteckten Zustand hierbei jeweils beidseitig im Wesentlichen abschnittsweise an das Ausgleichselement an. Hierbei gelangen die Stirnflächen wenigstens abschnittsweise leicht hinter die Sichtkante des Verbindungselements, wodurch Toleranzen am Profil ausgeglichen werden und die gesamte Schnittfläche abgedeckt wird. Im zusammengesteckten Zustand sind die beiden Profile an ihrer Verbindungsstelle durch das Ausgleichselement beabstandet. Mit anderen Worten, ist das flächige Ausgleichselement zwischen den Stirnflächen der beiden Profile zwischengesetzt. Das Ausgleichselement deckt die Schnittkante der Profile und die spitze Kante der Profile ab. Ferner ist die Sichtfläche dieses Verbindungselements verkleinert. Beim zusammengestellten Möbelgerüst fallen somit herstellungsbedingte Ungenauigkeiten bzw. Toleranzen nicht ins Auge. Somit kann ein modulares Möbelgerüst einfach aufgebaut werden, welches durch Hinzufügung von Wandblenden und/oder Böden zu einem Möbelelement erweitert werden kann, bei welchem Schnittkanten und spitze Ecken der Profile abgedeckt sind.

Das Ausgleichselement umfasst eine auskragende Sichtkante, welche stirnseitig der in Anlage stehenden Profile wenigstens abschnittsweise über Aussenflächen an Enden der Profile übersteht. Die Sichtkante deckt Schnittkanten und spitze Ecken der Profile ab. Somit sind, verglichen mit dem Fall, bei welchem die Profile über ihre Stirnflächen direkt miteinander verbunden werden, keinerlei optisch störende Spalten von aussen erkennbar. Insgesamt wird ein Verbindungselement geschaffen, welches günstig in der Herstellung ist, mit dessen Hilfe der Aufbau eines Möbelgerüsts einfach und zuverlässig ist, und wobei das Möbelgerüst keinerlei Spalte zwischen den Profilen aufzeigt. Ferner wird die Sichtfläche des Verbindungselements gegenüber vorbekannten Verbindungselementen verkleinert.

Vorzugsweise hat die Sichtkante eine Breite von 2 mm, wobei sie 0.5 mm übersteht. Durch die 2 mm dicke Sichtkante entsteht durch ein derartiges innenliegendes Verbindungselement eine gerundete Ecke. Ferner wird durch den 0.5 mm Überstand eine unbehandelte Sichtkante abgedeckt.

Vorzugsweise sind die Zapfen und das wenigstens eine Ausgleichselement einstückig ausgebildet. Das Verbindungselement kann beispielsweise mittels Spritzgussverfahren einstückig gegossen werden. Das Material des Verbindungselements kann beispielsweise Polyamid umfassen.

Vorzugsweise erstreckt sich die Ebene des Ausgleichselements zwischen jeweiligen Zapfen entlang einer Winkelhalbierenden zwischen den jeweiligen Zapfen. Somit können die Stirnflächen der Profile mit exakt gleichen Winkeln, z.B. jeweils 45°, angeschrägt werden. Somit werden Herstellungskosten reduziert.

Vorzugsweise ist die auskragende Sichtkante an wenigstens einem Winkelabschnitt des Ausgleichselements bogenförmig ausgebildet.

Vorzugsweise haben die Profile einen polygonalen Querschnitt, insbesondere einen im Wesentlichen rechteckigen Querschnitt. Hierbei können die Aushöhlungen der Profile korrespondierend zum polygonalen Querschnitt der Zapfen ausgebildet sein. Im zusammengesteckten Zustand ist somit das Verbindungselement mit jeder Strebe drehfest bzw. verwindungssteif verbunden. Diese verwindungssteife Verbindung wird weiter dadurch gefördert, indem die Stirnflächen der einzelnen Profile flächenbündig gegen das vorstehende Ausgleichselement anschlagen. Somit stabilisieren sich die Profile untereinander, da Kräfte optimal eingeleitet werden. Die Längskanten der Zapfen können mit einer Fase versehen sein.

Vorzugsweise laufen die Zapfen wenigstens abschnittsweise in Richtung zum distalen Ende konisch verjüngt aus. Die distalen Enden können spitz auslaufen. Alternativ kann die Spitze eine abgeflachte Spitze sein. Somit werden Verletzungsrisiken reduziert. Das konisch verjüngte Ende erlaubt ein vereinfachtes Aufstecken der einzelnen Profile auf die Zapfen des Verbindungselements, indem die Profile durch die geneigten Flächen einfach und zuverlässig geführt werden. Somit sind die Profile und das Verbindungselement einfach und sicher miteinander verbindbar.

Vorzugsweise sind Oberflächen der Zapfen wenigstens abschnittsweise mit Noppen ausgebildet. Die Noppen können beim Aufstecken der Profile auf die Zapfen wenigstens abschnittsweise abgeschert werden. Dies tritt dann auf, falls die Profile eine zu geringe Innenabmessung haben. Somit können Toleranzen aufgenommen werden. Die Profile werden mit den Zapfen verleimt.

Die vorgenannte Aufgabe wird ebenso durch ein Möbelgerüst gelöst, welches eine Mehrzahl von Profilen und wenigstens ein Verbindungselement nach einem der Ansprüche 1 bis 8 umfasst, zum endseitigen Verbinden der Profile miteinander. Somit ist ein Möbelgerüst geschaffen, welches schnell und einfach zusammensteckbar ist. Die Stirnflächen der jeweiligen Profile stossen, sobald vollständig auf die Zapfen des Verbindungselements aufgesteckt, gegen das Ausgleichselement des Verbindungselements an. Durch die Sichtkante des Ausgleichselements entsteht beim Möbelgerüst eine gerundete Ecke. Ferner werden unbehandelte Schnittkanten der Profile durch die überstehende Sichtkante abgedeckt. Die Zapfen können einen polygonalen Querschnitt haben, z.B. einen rechteckigen Querschnitt, und die Innenflächen der Aushöhlungen der Profile können korrespondierend ausgeformt sein. Im zusammengesteckten Zustand kann somit das Verbindungselement gegenüber jedem der Profile drehstarr hiermit verbunden werden. Somit sind auch die Profile untereinander drehstarr verbunden. Ferner sind die Stirnflächen der Profile derart angewinkelt, dass sie gemeinsam flächenbündig mit dem zwischengesetzten Ausgleichselement in Anlage gelangen. Somit sind die Profile verwindungssteif miteinander verbunden, wodurch ein Möbelgerüst geschaffen wird, welches hohe Kräfte aufnimmt und hierbei keinerlei Verformungen bzw. Verwindungen aufzeigt. Die Profile können mittels Stoffschluss mit den Zapfen des Verbindungselements verbunden sein. In dieser Variante wird bei der Montage ein Klebemittel auf die Oberfläche der Zapfen aufgetragen und werden die Profile nachfolgend auf die Zapfen aufgesteckt.

Die vorgenannte Aufgabe wird ebenso durch ein Möbelelement gelöst, umfassend wenigstens ein Möbelgerüst nach Anspruch 9 und eine Mehrzahl von hiermit bestückbaren Wandblenden und/oder Böden. Ein solches Möbelelement ist einfach herstellbar und zeigt keine Schnittflächen oder spitzen Ecken. Ein solches Möbelelement kann ein jegliches und für jeden Wohnzweck geeignetes Möbel, z.B. ein Sideboard, ein Schrank, usw., oder ein Regalsystem, z.B. ein Wandregal, ein freistehendes Regal, usw., sein. Das Möbelelement kann in diverse Möbel integriert oder selbständig als Möbel verwendet werden. Das Möbelelement ist für den privaten oder gewerblichen Zweck geeignet.

Es wird ausführlich darauf hingewiesen, dass die vorstehenden Ausführungsvarianten beliebig kombinierbar sind. Lediglich diejenigen Kombinationen von Ausführungsvarianten sind ausgeschlossen, die durch die Kombination zu Widersprüchen führen würden.

Im Folgenden wird die vorliegende Erfindung anhand von in der Zeichnung dargestellten Ausführungsbeispielen weiter erläutert. Dabei zeigen:
- Figuren 1a-c: unterschiedliche Perspektivansichten von einem Verbindungselement in einer Ausführungsform gemäss der Erfindung;
- Figuren 2a,b: jeweils eine Draufsicht und eine Unteransicht auf das in Figuren 1a-c gezeigte Verbindungselement; und
- Figuren 3a-c: schematische Darstellungen unterschiedlicher Möbelgerüste.

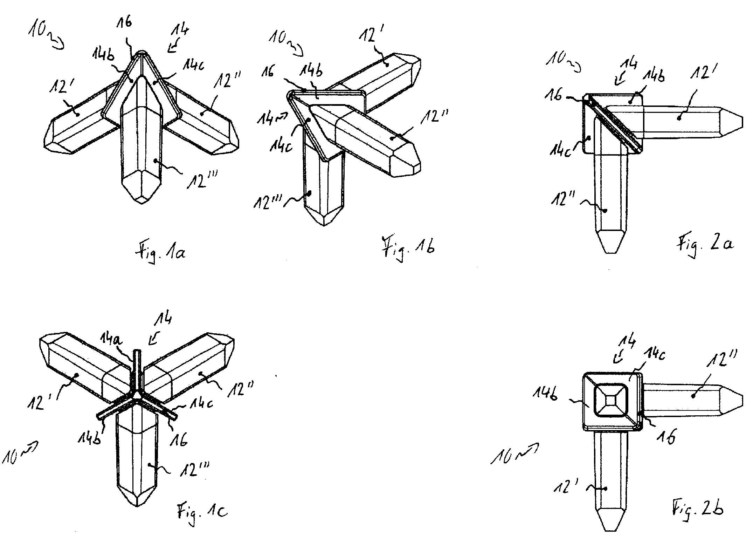

Die Figuren 1a-c zeigen ein Verbindungselement 10 in einer bevorzugten Ausführungsform gemäss der Erfindung in unterschiedlichen Perspektivansichten. Die Figuren 2a,b zeigen das Verbindungselement 10 jeweils in einer Draufsicht und einer Unteransicht. Das Verbindungselement 10 umfasst in der gezeigten Ausführungsform insgesamt drei Zapfen 12' - 12"', welche jeweils einen Winkelabstand von 90° zueinander einnehmen. Derart angeordnet, spannen die drei Zapfen 12' - 12"' insgesamt drei Ebenen auf.

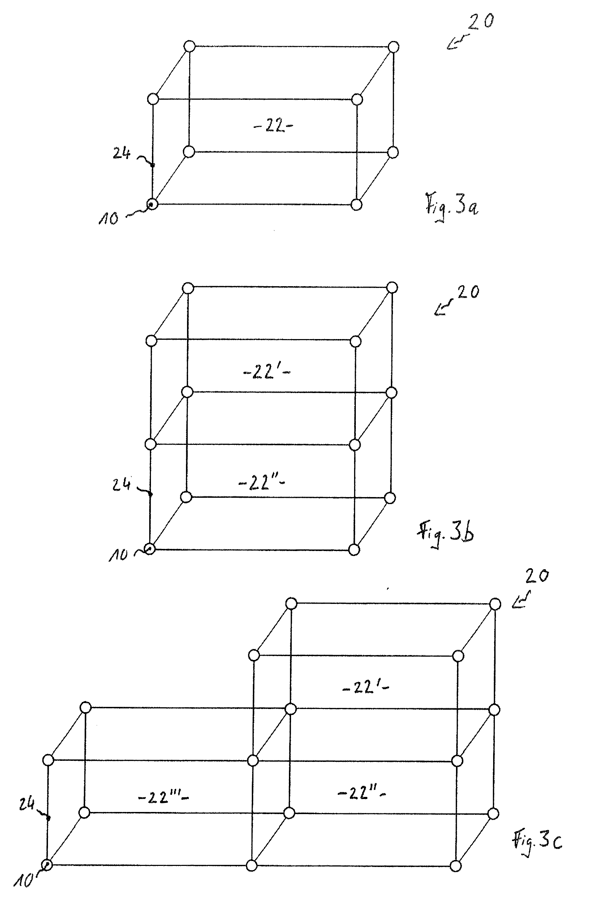

Das gezeigte Verbindungselement 10 kann auch als ein Eckverbinder bezeichnet werden, wobei der nach unten ausgerichtete Zapfen 12"' in den endseitigen Hohlraum bzw. Aushöhlung einer senkrecht aufgerichteten Strebe (nicht gezeigt) eingesteckt wird und die horizontal ausgerichteten Profile 12', 12" jeweils weitere Profile aufnehmen. Somit kann die obere Abschlusskante eines Möbelgerüsts aus insgesamt vier Verbindungselementen 10 und jeweils im Abstand von 90° winkelversetzten Profilen aufgebaut werden. Weitere Details zum Aufbau des Möbelgerüsts werden im Folgenden in Bezug auf Figuren 3a-3c gegeben.

Das Verbindungselement 10 umfasst ferner ein Ausgleichselement 14, von welchem aus sich die Profile 12' - 12"' erstrecken können. In der in den Figuren gezeigten Ausführungsform sind die Zapfen 12' - 12"' direkt mit dem Ausgleichselement 14 verbunden. Das Ausgleichselement 14 umfasst plattenförmige Elemente 14a - 14c, welche in der gezeigten Ausführungsform einstückig miteinander verbunden sind. Die plattenförmigen Elemente 14a - 14c des Ausgleichselements 14 sind zueinander angewinkelt. Die plattenförmigen Elemente 14a - 14c ragen über die Oberflächen der einzelnen Zapfen 12' - 12"' vor. Das Ausgleichselement 14 umfasst am Rand eine umlaufende, auskragende Sichtkante 16, welche über den Schnittkanten von aufgesteckten Profilen übersteht und somit die Schnittkanten der Profile abdeckt. Ebenso werden scharfe Kanten der Profile abgedeckt.

Die Winkel der plattenförmigen Elemente 14a - 14c sind derart eingestellt, dass ein jeweiliges plattenförmiges Element 14a - 14c, welches zwischen zwei Zapfen angeordnet ist, entlang der jeweiligen Winkelhalbierenden dieser beiden Zapfen verläuft. Dieser Verlauf einzelner plattenförmiger Elemente 14a - 14c ist identisch in Bezug auf alle Ebenen, welche jeweils durch zwei Zapfen aufgespannt werden.

Die drei Zapfen 12' - 12'" sind jeweils von einem Ursprungspunkt ausgehend bei einem Winkel von 90° voneinander beabstandet. Somit sind die jeweiligen plattenförmigen Elemente 14a - 14c des Ausgleichselements 14 bei einem Winkel von 45° zu jeweils angrenzenden Zapfen ausgerichtet. Obwohl das Ausgleichselement 14 hier als einstückiges Bauteil beschrieben ist, kann das Ausgleichselement 14 ebenfalls mehrere Bauteile, beispielsweise drei separate plattenförmige Elemente 14a - 14c, umfassen. Erfindungsgemäss werden die jeweiligen plattenförmigen Elemente 14a - 14c des Ausgleichselements 14 bündig zwischen korrespondierende Stirnflächen bzw. Schnittflächen der aufgesteckten Profile (nicht gezeigt) zwischengesetzt. Mit anderen Worten, sind die jeweiligen Stirnflächen der aufgesteckten Profile durch die Dicke eines jeweiligen plattenförmigen Elements 14a - 14c des Ausgleichselements 14 voneinander beabstandet.

Es besteht ein wesentlicher Vorteil darin, dass mögliche Spalte, welche aufgrund von möglichen Toleranzen herrühren können, durch die Sichtkante 16 des Ausgleichselements 14 insgesamt verdeckt werden. Somit kann der Betrachter am Kantenabschnitt eines Möbelgerüsts eine einheitliche und spaltenfreie Fläche erfahren.

In der in den Figuren gezeigten Ausführungsform haben die einzelnen Zapfen 12' - 12"' einen im Wesentlichen quadratischen Querschnitt. Obwohl nicht gezeigt, können die Aushöhlungen an den Längsenden der Profile korrespondierend ausgeformt sein. Ein Vorteil dieser Ausgestaltung besteht darin, dass das Verbindungselement 10 und die jeweils aufgesteckten Profile hierdurch insgesamt drehstarr miteinander verbunden sind. Somit wird die Verbindungssteifigkeit am jeweiligen Kantenabschnitt des Möbelgerüsts erfüllt bzw. verbessert. Ferner stehen die Stirnflächen der einzelnen Profile über die jeweiligen plattenförmigen Elemente 14a - 14c des Ausgleichselements 14 miteinander flächig in Verbindung. Hierdurch können Kräfte zuverlässig eingeleitet werden, wodurch weiterhin die Stabilität erhöht wird. Wie in den Figuren gezeigt, sind die Aussenlängskanten der Zapfen 12' - 12"' jeweils mit einer Fase versehen. Ferner sind die jeweiligen Endabschnitte der Zapfen 12' - 12"' distal auslaufend konisch verjüngt bzw. laufen pyramidenförmig spitz aus. Hierdurch wird das Einführen der jeweiligen Zapfen 12' - 12"' in die Aushöhlungen der Profile vereinfacht. Die Spitzen der jeweils pyramidenförmig auslaufenden distalen Enden können abgeflacht sein. Hierdurch wird eine Verletzungsgefahr reduziert.

Die Zapfen 12' - 12"' können über einen Teil oder über die gesamte Längserstreckung hinweg einen zum distalen Ende hin leicht abnehmenden Querschnitt aufweisen. Mit anderen Worten, nimmt der Querschnitt der Zapfen 12' - 12'" vom Verbindungspunkt in Richtung zum distalen Ende leicht ab. Somit können die jeweiligen Zapfen 12' - 12"' in die Aushöhlungen der jeweiligen Profile, deren Innenquerschnitt über die Länge unverändert ist, zuverlässig eingespannt werden. Die Profile und die Zapfen 12' - 12"' werden mittels Stoffschluss miteinander verbunden, beispielsweise unter Hinzufügung von Klebstoff. Bei dem gezeigten 3-achsigen Verbindungselement 10 werden die Profile doppelt auf Gehrung geschnitten. Diese Profile können beispielsweise vorab eloxiert sein, wobei das Verbindungselement 10 die unbehandelte Schnittkante vorteilhafterweise abdeckt. Es werden Toleranzen der Profile aufgenommen, indem die auskragende Sichtkante übersteht. Die Sichtkante kann z.B. 0.5 mm überstehen. Bei einer 2-achsigen Ausführung (nicht gezeigt) wird vorteilhafterweise die scharfe Kante durch die Sichtkante 16 abgedeckt. Bei der gezeigten 3-achsigen Ausführung wird vorteilhafterweise die spitze Ecke durch die Sichtkante 16 abgedeckt.

Wie bereits erwähnt, sollte der Querschnitt von den Zapfen 12' - 12"' eine jegliche von der Kreisform abweichende Form haben, wodurch vorteilhaft eine drehstarre Verbindung zwischen dem Verbindungselement 10 und einer jeglichen Strebe erzielt wird. Obwohl der Querschnitt der Zapfen 12' - 12"' in der in den Figuren gezeigten Ausführungsform im Wesentlichen quadratisch ist, kann der Querschnitt beispielsweise eine jegliche polygonale Form annehmen. Zu jedem gewählten polygonalen Querschnitt der Zapfen 12' - 12'" können die Innenflächen der Aushöhlungen von den Profilen bzw. deren Innenquerschnitt korrespondierend geformt sein. Das Verbindungselement 10 ist in den Figuren als ein einstückiges Bauteil ausgebildet, welches beispielsweise mittels Spritzgussverfahren hergestellt ist.

Als Material des Verbindungselements 10 kann Polyamid verwendet werden. In der beschriebenen Ausführungsform ist das Verbindungselement 10 als ein 3-achsiger Eckverbinder ausgeführt. In einer nicht gezeigten Variante kann das Verbindungselement als ein 2-achsiger Verbinder ausgeführt sein, wobei die beiden Achsen zueinander angewinkelt sein können, z.B. um 90°. In einem weiteren Beispiel können die beiden Achsen linear verlaufen. Ein solches lineares Verbindungselement dient dann nicht mehr als Verbindung über Eck sondern z.B. als ein Verlängerungsadapter zum linearen Zusammenstecken von zwei axial verlaufenden Profilen (beispielsweise zum Zwecke einer Verlängerung). Figuren 3a-c zeigen schematische Darstellungen unterschiedlicher Möbelgerüste 20. Figur 3a zeigt eine schematische Darstellung eines Möbelgerüsts 20, umfassend ein quaderförmig zusammengestecktes Modulelement 22. Die Kanten des Modulelements 22 sind jeweils durch Profile 24 ausgebildet (aus Gründen der besseren Übersicht ist in den Figuren 3a-c jeweils nur einem der Profile das Bezugszeichen 24 zugesprochen). Die Profile 24 sind an den Eckpunkten durch jeweilige Verbindungselemente 10 gemäss der Erfindung verbunden. Es ist zu erwähnen, dass die Verbindungselemente 10 in den Figuren 3a-c aus Gründen der besseren Übersicht lediglich darstellhaft als ein Kreis dargestellt sind. In Figur 3a sind alle Verbindungselemente 10 als 3-achsiges Verbindungselement 10, wie in Figuren 1 und 2 gezeigt, ausgeführt. Vorteilhafterweise werden durch das erfindungsgemässe Verbindungselement 10 die abgewinkelten Flächen der Profile 24 verbunden. Hierdurch wird die Sichtfläche des Verbindungselements 10 verkleinert.

Figur 3b zeigt ein Möbelgerüst 20, welches aus zwei übereinander angeordneten und miteinander verbundenen Modulelementen 22',22", wie in Figur 3a gezeigt, zusammengesetzt ist. Die jeweiligen Verbindungselemente zum Verbinden der beiden Modulelemente 22',22" können hierbei als 4-achsige Verbindungselemente ausgebildet sein. Bei einem solchen Verbindungselement erstrecken sich zwei Zapfen vom Mittelpunkt ausgehend linear in vertikale Richtung. Ferner erstrecken sich zwei Zapfen vom Mittelpunkt ausgehend in einem Winkel von 90° zueinander und Spannen eine horizontale Ebene auf.

Figur 3c zeigt ein Möbelgerüst 20, welches aus drei Modulelementen 22' - 22"' zusammengesetzt ist. In diesem Beispiel sind jene Verbindungselemente, welche gleichzeitig mit allen drei Modulelementen 20' - 20"' in Verbindung stehen, als 5-achsige Verbindungselemente ausgeführt. Obwohl nicht gezeigt, kann ein ebenfalls im Umfang der Erfindung umfasstes Verbindungselement als ein 6-achsiges Verbindungselement ausgeführt sein.

Die in den Figuren 3a - c dargestellten Möbelgerüste 20 können als modulares Gerüst zum Ausbilden eines Möbelelements (nicht gezeigt) dienen. Hierbei können jeweils vertikal aufgespannte Ebenen mit Blenden bzw. Tablaren bestückt werden, beispielsweise an den Seitenflächen und/oder Rückflächen. Zusätzlich können die jeweils horizontal aufgespannten Ebenen mit Böden bestückt werden. Die Blenden bzw. Tablare und die Böden können aus Holz gefertigt sein. Die jeweils zur Front aufgespannte Ebene kann frei bleiben oder mit Klappen, Türelementen, Jalousieelementen, usw. erweitert werden. Das Möbelgerüst eines solchen Möbelelements ist sehr einfach modular montierbar. Die hierbei verwendeten Verbindungselemente verhindern die Sichtbarmachung von Kanten und Ecken der Profile 24, welche z.B. aufgrund von Herstellungstoleranzen der Profile 24 entstehen können und sorgen zudem für eine verbindungssteife Verbindung. Somit ist ein ästhetisch ansprechendes Möbelelement geschaffen, welches zudem sehr stabil ist und einfach montierbar ist.

## Patentansprüche

1. Verbindungselement (10) zum Verbinden von Profilen (24) eines Möbelgerüsts (20), wobei das Verbindungselement (10) eine Mehrzahl von Zapfen (12' - 12"'), welche sich voneinander radial in einer vorbestimmten Winkelbeziehung zueinander erstrecken, und wenigstens ein Ausgleichselement (14) umfasst, welches eine auskragende Sichtkante (16) umfasst, welche wenigstens abschnittsweise über Aussenflächen der Profile (24) übersteht.

2. Verbindungselement (10) nach Anspruch 1, wobei die Sichtkante eine Breite von 2 mm hat und 0.5 mm übersteht.

3. Verbindungselement (10) nach Anspruch 1 oder 2, wobei die Zapfen (12' - 12"') und das wenigstens eine Ausgleichselement (14) einstückig ausgebildet sind.

4. Verbindungselement (10) nach einem der vorhergehenden Ansprüche, wobei die Ebene des Ausgleichselements (14) zwischen jeweiligen Zapfen entlang einer Winkelhalbierenden zwischen den jeweiligen Zapfen (12' - 12"') erstreckt ist.

5. Verbindungselement (10) nach einem der vorhergehenden Ansprüche, wobei die auskragende Sichtkante (16) an wenigstens einem Winkelabschnitt des Ausgleichselements (14) bogenförmig ausgebildet ist.

6. Verbindungselement (10) nach einem der vorhergehenden Ansprüche, wobei die Zapfen (12' - 12"') einen polygonalen Querschnitt, insbesondere einen im Wesentlichen rechteckigen Querschnitt haben.

7. Verbindungselement (10) nach einem der vorhergehenden Ansprüche, wobei die Zapfen (12' - 12"') wenigstens abschnittsweise in Richtung zum distalen Ende konisch verjüngt auslaufen.

8. Verbindungselement (10) nach einem der vorhergehenden Ansprüche, wobei Oberflächen der Zapfen (12' - 12"') wenigstens abschnittsweise mit Noppen ausgebildet sind.

9. Möbelgerüst (20), umfassend eine Mehrzahl von Profilen (24) und wenigstens ein Verbindungselement (10) nach einem der Ansprüche 1 bis 8, zum endseitigen Verbinden der Profile (24) miteinander.

10. Möbelelement, umfassend wenigstens ein Möbelgerüst (20) nach Anspruch 9 und eine Mehrzahl von hiermit bestückbaren Wandblenden und/oder Böden.
